(19) Europäisches Patentamt
European Patent Office
Office européen des brevets

(11) **EP 4 686 922 A1**

(12) **EUROPEAN PATENT APPLICATION**

(43) Date of publication:
**04.02.2026 Bulletin 2026/06**

(21) Application number: **25184522.8**

(22) Date of filing: **23.06.2025**

(51) International Patent Classification (IPC):
**G01H 3/12** *(2006.01)*      G01H 3/04 *(2006.01)*
**G01H 3/08** *(2006.01)*

(52) Cooperative Patent Classification (CPC):
**G01H 3/125**; G01H 3/04; G01H 3/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.08.2024 IN 202421058443**

(71) Applicant: **Tata Consultancy Services Limited
400 021 Mumbai, Maharashtra (IN)**

(72) Inventors:
• **RAKSHIT, Raj
700160 Kolkata, West Bengal (IN)**
• **BISWAS, Mayukh
700160 Kolkata, West Bengal (IN)**
• **SWAIN, Amit
700160 Kolkata, West Bengal (IN)**
• **BHAUMIK, Chirabrata
700160 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR UNOBTRUSIVE SPATIAL LOCALIZATION AND DETECTION OF IMPACT INDUCED SOUNDWAVES**

(57)      This disclosure relates generally to method and system for unobtrusive spatial localization and detection of impact induced soundwaves. Runtime localization of surface wear zones in industrial machines has been a daunting problem in the domain of predictive maintenance. The method disclosed provides spatial localization of impacts soundwaves generated to locate the wearzones. The method processes the sound signal from the microphone array occurred surface of target of interest of the machinery. The sound signal is processed to identify one or more impact hotspots on the target surface of the machinery by searching one or more peaks. Finally, exact location of occurred impact sound from the one or more impact hotspots is localized and is projected on the machinery.

300

preconfigure an industrial machinery by placing a microphone array at different locations within the machinery to record a sound signal $s(t)$, and simultaneously obtaining geometrical structure parameters of the machinery — 302

obtain (i) the sound signal $s(t)$ from the microphone array occurred surface of target of interest of the machinery, (ii) an impact duration which is an occurrence duration of the sound signal s(t), and (iii) a target FPS — 304

slice the sound signal $s(t)$ by adjusting a sliding time window $T$ and a step size $\Delta T$ to obtain a time windowed sound signal $s(t)_{win}$ — 306

applying filter to filter the time windowed sound signal $s(t)_{win}$ to obtain a filtered sound signal $s(t)_{filt}$ based on (i) a sliding narrow band pass filter of central frequency f, (ii) a frequency range between $[F_L, F_H]$ a spectral response of impact type, and (iii) a band distance $\Delta F$ — 308

perform an eigenvalue decomposition over a covariance matrix $R$ of the filtered sound signal $s(t)_{FILT}$ to determine a noise subspace $Q_n$ — 310

A

**FIG. 3A**

EP 4 686 922 A1

A

obtain a steering vector $A(\theta_\sigma, \varphi_\sigma)$ from the geometrical structure parameters of the machinery and the noise subspace $Q_n$ to evaluate a spatial power matrix $P\_SPATIAL(\theta_\sigma, \varphi_\sigma)_{T,f}$ for each time window of the sound signal $s(t)_{filt}$

312

obtain a spatial localization map on a microphone array plane for each time window $(P\_TOTAL(\theta_\sigma, \varphi_\sigma)_T)$ using the spatial power matrix $P\_SPATIAL(\theta_\sigma, \varphi_\sigma)_{T,F}$

314

project the spatial localization map on target surface of the microphone array plane with a cartesian coordinates $\sigma'(x, y, z)$

316

identify a one or more impact hotspots on the target surface of the machinery by searching one or more peaks in the spatial localization map projected into the target surface and accumulating the one or more impact hotspots over a long temporal range

318

localize exact location of occurred impact sound from the one or more impact hotspots and is projected on the machinery

320

**FIG. 3B**

**Description**

CROSS-REFERENCE TO RELATED APPLICATIONS AND PRIORITY

The present application claims priority to Indian application no. 202421058443, filed on August 01, 2024.

TECHNICAL FIELD

The disclosure herein generally relates to spatial localization, and, more particularly, to method and system for unobtrusive spatial localization and detection of impact induced soundwaves.

BACKGROUND

In real life situations, soundwaves such as background noise, overlapping sound sources, and the occurrence of sound sources belonging to the same event class can occur. Overlapping sound sources refer to situations where multiple event classes occur simultaneously in each time instance, which can be addressed by applying sound event detection (SED) that can detect multiple overlapping event classes at the same time. Such SED tasks can be utilized in various fields in which sound is detected, such as surveillance or audio captioning. Sound event localization (SSL) is a task of estimating the location of a sound source in three-dimensional coordinates using the recorded multichannel audio signal, with the microphone being the reference point for the recording. SSL simplifies the direction-of-arrival (DOA) estimation by only considering azimuth and elevation without estimating the distance to the microphone array.

Due to intensive unobtrusive background sound challenges in real time applications, existing approaches employs two-stages having two separate networks to estimate SED and DoA. Such approach avoids multi-objective problem because it builds a network for each target. However, this increases complexity of the system and overall size of the network. For example, in mineral processing machineries such as grinding mills, crushers, hydro cyclones and thereof ore beneficiation processes lead to phenomenon such as surface wear, machine faults, downtime and the like. For instance, in ball mills machinery impacts beyond threshold of ball mill results in wearing of liners. The runtime inspection of liner wear from outside the ball mill has been a longstanding problem. Abrupt stoppage and manual maintenance of ball mill causes huge downtime losses to the mineral processing plant. Existing techniques fails to detect high impact soundwaves occurrences in complex machinery. This necessitates unobtrusive sensing of wear phenomena, specifically for spatially localizing the high impact soundwaves occurrence regions where is of principal importance.

SUMMARY

Embodiments of the present disclosure present technological improvements as solutions to one or more of the above-mentioned technical problems recognized by the inventors in conventional systems. For example, in one embodiment, a method for unobtrusive spatial localization and detection of impact induced soundwaves is provided. The method includes to preconfigure an industrial machinery by placing a microphone array at different locations within the machinery to record a sound signal, and simultaneously obtaining geometrical structure parameters of the machinery. Initially, (i) the sound signal from the microphone array occurred surface of target of interest of the machinery, (ii) an impact duration which is an occurrence duration of the sound signal s(t), and (iii) a target FPS are obtained. Further, the the sound signal is continuously sliced by adjusting a sliding time window and a step size to obtain a time windowed sound signal. The the time windowed sound signal is filtered by applying filtering (308) to obtain a filtered sound signal based on (i) a sliding narrow band pass filter of central frequency f, (ii) a frequency range between a spectral response of impact type, and (iii) a band distance.

The method performs an eigenvalue decomposition over a covariance matrix of the filtered sound signal $s(t)_{FILT}$ to determine a noise subspace. Further, a steering vector is obtained from the geometrical structure parameters of the machinery and the noise subspace to evaluate a spatial power matrix for each time window of the sound signal. Then, a spatial localization map is obtained on a microphone array plane for each time window using the spatial power matrix. Further, the spatial localization map on target surface of the microphone array plane is projected with a cartesian coordinates Further, a one or more impact hotspots are identified on the target surface of the machinery by searching one or more peaks in the spatial localization map projected into the target surface and accumulating the one or more impact hotspots over a long temporal range. Finally, the exact location of occurred impact sound from the one or more impact hotspots are localized and is projected on the machinery.

**In** another aspect, a system for unobtrusive spatial localization and detection of impact induced soundwaves is provided. The system includes to preconfigure an industrial machinery by placing a microphone array at different locations within the machinery to record a sound signal , and simultaneously obtaining geometrical structure parameters of the machinery. Initially, (i) the sound signal from the microphone array occurred surface of target of interest of the machinery, (ii) an impact duration which is an occurrence duration of the sound signal s(t), and (iii) a target FPS are obtained. Further, the the sound signal is continuously sliced by adjusting a sliding time window and a step size to obtain a time windowed sound signal. The the time windowed sound signal is filtered by applying filtering (308) to obtain a filtered sound signal based on (i) a sliding narrow band pass filter of central frequency f, (ii) a frequency range between a spectral response of impact type, and (iii) a band distance.

The method performs an eigenvalue decomposition over a covariance matrix of the filtered sound signal $s(t)_{FILT}$ to determine a noise subspace. Further, a steering vector is obtained from the geometrical structure parameters of the machinery and the noise subspace to evaluate a spatial power matrix for each time window of the sound signal. Then, a spatial localization map is obtained on a microphone array plane for each time window using the spatial power matrix. Further, the spatial localization map on target surface of the microphone array plane is projected with a cartesian coordinates Further, a one or more impact hotspots are identified on the target surface of the machinery by searching one or more peaks in the spatial localization map projected into the target surface and accumulating the one or more impact hotspots over a long temporal range. Finally, the exact location of occurred impact sound from the one or more impact hotspots are localized and is projected on the machinery.

**In** yet another aspect, there are provided one or more non-transitory machine-readable information storage mediums comprising one or more instructions, which when executed by one or more hardware processors causes a method for unobtrusive spatial localization and detection of impact induced soundwaves is provided. The method includes to preconfigure an industrial machinery by placing a microphone array at different locations within the machinery to record a sound signal , and simultaneously obtaining geometrical structure parameters of the machinery. Initially, (i) the sound signal from the microphone array occurred surface of target of interest of the machinery, (ii) an impact duration which is an occurrence duration of the sound signal s(t), and (iii) a target FPS are obtained. Further, the the sound signal is continuously sliced by adjusting a sliding time window and a step size to obtain a time windowed sound signal. The the time windowed sound signal is filtered by applying filtering (308) to obtain a filtered sound signal based on (i) a sliding narrow band pass filter of central frequency f, (ii) a frequency range between a spectral response of impact type, and (iii) a band distance.

The method performs an eigenvalue decomposition over a covariance matrix of the filtered sound signal $s(t)_{FILT}$ to determine a noise subspace. Further, a steering vector is obtained from the geometrical structure parameters of the machinery and the noise subspace to evaluate a spatial power matrix for each time window of the sound signal. Then, a spatial localization map is obtained on a microphone array plane for each time window using the spatial power matrix. Further, the spatial localization map on target surface of the microphone array plane is projected with a cartesian coordinates Further, a one or more impact hotspots are identified on the target surface of the machinery by searching one or more peaks in the spatial localization map projected into the target surface and accumulating the one or more impact hotspots over a long temporal range. Finally, the exact location of occurred impact sound from the one or more impact hotspots are localized and is projected on the machinery.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary system for unobtrusive spatial localization and detection of impact induced soundwaves occurred in industrial machineries according to some embodiments of the present disclosure.
FIG.2 is a functional block diagram illustrating an example to detect impact induced soundwaves occurred in industrial machineries using the system of FIG. 1, in accordance with some embodiments of the present disclosure.
FIG.3A and FIG.3B (collectively referred as FIG.3) is a flow diagram illustrating a method to detect impact induced soundwaves using the system of FIG. 1, in accordance with some embodiments of the present disclosure.
FIG.4 illustrates various lab scale experiments having metal sheet and ball mill for detecting soundwaves using the system of FIG. 1, in accordance with some embodiments of the present disclosure.
FIG.5 illustrates two-dimensional view of cartesian coordinates having source at azimuth and elevation angles (θ, φ) with respect to a N-mic circular array, using the system of FIG. 1, in accordance with some embodiments of the present disclosure.
FIGS.6A through 9 illustrates a metal sheet experimental results for detecting impact induced soundwaves using the system of FIG. 1, in accordance with some embodiments of the present disclosure.
FIGS.10 through 11 illustrates an experimental result of cylindrical ball mill and combined view of three impacts occurred inside the ball mill using the system of FIG. 1, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

GLOSSARY :

"Unobtrusive sensing" refers to sensing any physical quantity on a target using sensors placed at a distance from the target, so that the sensing takes place in a non-contact manner.

"Microphone array" refers to a group of microphones arranged in a certain geometrical pattern (linear, circular, planar, and the like).

"Spatial localization" refers to position estimation of an object or an event by sensing one or more physical properties linked to the object or event.

"Direction of Arrival (DOA)" refers to direction of arrival of physical quantity (soundwave, acoustic wave, electromagnetic wave and the like) corresponding to receiver sensor array.

"Two-dimensional beamforming" refers to filtering a signal received by a sensor array along a specific direction in space, using various mathematical operations.

"MUSIC" refers to Multiple Signal Classification algorithm, which is a conventional beamforming algorithm.

"Impact induced sound waves" refers to the acoustic waves or soundwaves resulting from an impact occurred in machinery due to factors. These are short lived, non-stationary and wideband in nature.

"Wideband sound" refers to a sound signal or soundwaves which occupies a wide range of frequencies in the frequency domain.

"Wear zone" refers to the part of machinery which gets worn out significantly due to impact, abrasion, crushing, grinding, and the like.

"Non-stationary" refers to the nature of a random process where statistical parameters of random process (such as mean, variance) change with time.

"Non-coherent" refers to the nature of two signals where they are not correlated over the entire frequency range.

"Spatiotemporal distribution" refers to the distribution of a measurable quantity in space over a range of time.

"SAG mill" refers to semi autogenous ball mill, where balls are added to the ore to aid the process of grinding.

"Steering vector" refers to a mathematical construct, which can address all directions in a space by adjusting its azimuth and elevation values in relation to the spatial axes. It is utilized by MUSIC algorithm to find the spatial power over a range of directions.

"Surface wear" in industrial machines demands timely intervention from the operator which may otherwise lead to enormous downtime. For instance, in any industrial ball mill, liner wear is primarily caused by out of toe impacts with the ball mill charge. Extraction of spatio-temporal information of such events from the resultant soundwaves is an intriguing problem in the domain of predictive maintenance. While many contact-based sensing methods addresses the problem of fixing sensor to the surface poses operational challenges. This paves way to non-contact localization of impact induced soundwaves.

Existing Direction of Arrival (DOA) algorithms cater to speech and intermittent sources, while there is rarely any existing literature regarding localization of impact sources. InSAR approach for mapping surface wear requires the sensor to be inside the ball mill posing practical constraints. Conventional two-dimensional (2D) beamforming algorithms assume coherent and narrow-band source, where phase information is extracted over a narrow band $\beta$ centred at an arbitrary central frequency $f_c$. These assumptions complement for intermittent and stationary sound sources. However, sounds or soundwaves generated from any impacts, occurred signals are transient, non-stationary, and wideband in nature. **In** such scenarios, conventional 2D beamforming techniques produces high localization errors for impact induced soundwaves.

Embodiments herein provide a method and system for unobtrusive spatial localization and detection of impact induced sound waves. The system may be alternatively referred as impact soundwaves detection system. Runtime localization of surface wear zones in industrial machineries is a challenging problem in the domain of predictive maintenance. Wear zone occurs due to the percussive impact and dynamic contact of a surface by another solid body in industrial machinery. Spatial localization of impact sounds generated due to this phenomenon locates the wear zones in the industrial machinery for example grinding mills, rotating or moving (crushers) in nature which eliminates contact sensing outside the machine. The method of the present disclosure localizes wideband, non-coherent sources of impacts for both planar and curved target surfaces using a modified 2D beamforming technique with root mean square error (RMSE) localization error less than 10%.

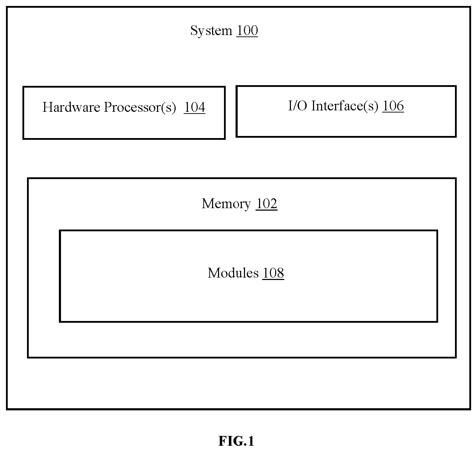

Referring now to the drawings, and more particularly to FIG.1 through FIG.11, where similar reference characters denote corresponding features consistently throughout the figures, there are shown preferred embodiments and these embodiments are described in the context of the following exemplary system and/or method.

FIG.1 illustrates an exemplary system for unobtrusive spatial localization and detection of impact induced soundwaves occurred in industrial machineries according to some embodiments of the present disclosure. In an embodiment, the system 100 includes processor (s) 104, communication interface (s), alternatively referred as or input/output (I/O) interface(s) 106, and one or more data storage devices or memory 102 operatively coupled to the processor (s) 104. The system 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

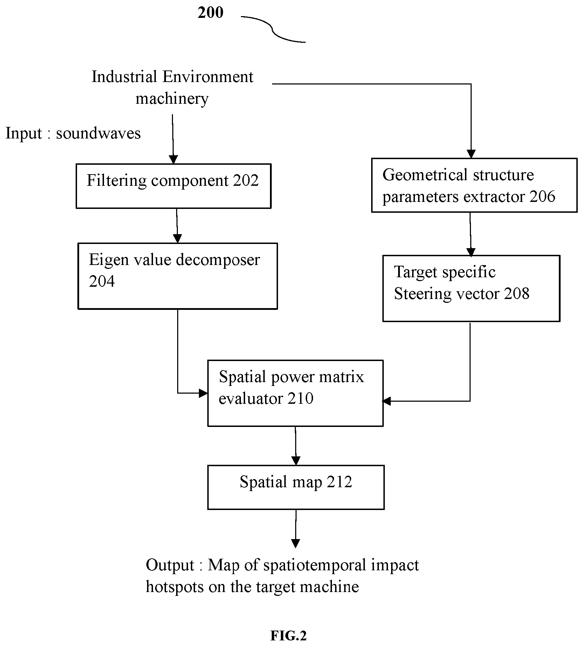

In an embodiment, the memory 102 includes a plurality of modules 108 can also include various sub-modules as depicted in FIG.2. The plurality of modules 108 include programs or coded instructions that supplement applications or functions performed by the system 100 for executing different steps involved in the process of detecting impact induced soundwaves of the system 100. The plurality of modules 108, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 108 can be used by hardware, by computer-readable instructions executed by the one or more hardware processors 104, or by a combination thereof.

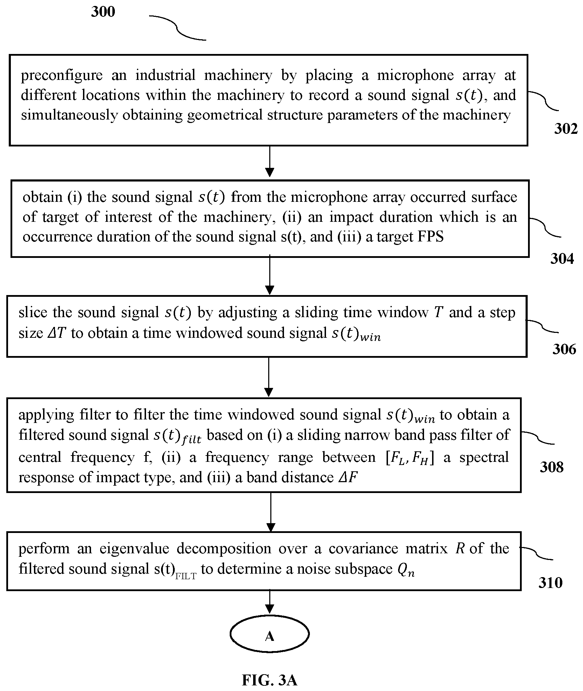

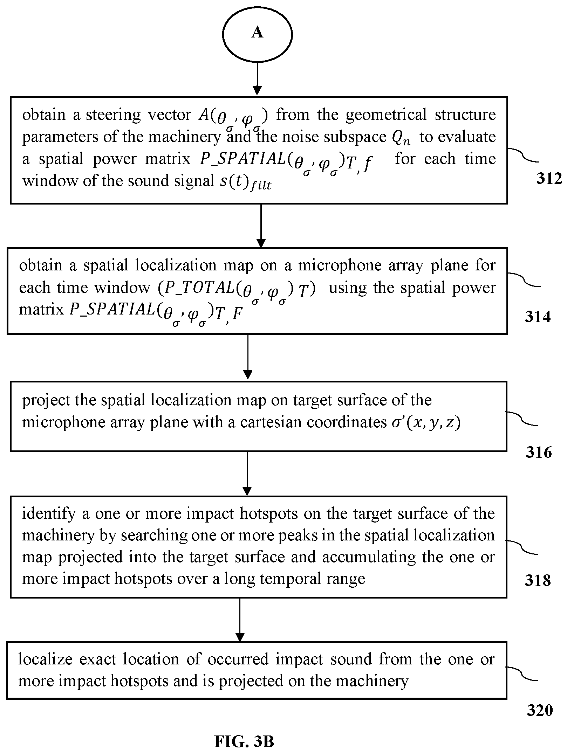

The memory 102 may comprise information pertaining to input(s)/output(s) of each step performed by the processor(s) 104 of the system 100 and methods of the present disclosure. Functions of the components of system 100, for detection of impact induced soundwaves, are explained in conjunction with FIG.2 and FIG.3 providing flow diagram, architectural overviews, and performance analysis of the system 100.

FIG.2 is a functional block diagram illustrating an example to detect impact induced soundwaves occurred in industrial machineries using the system of FIG. 1, in accordance with some embodiments of the present disclosure.

In one embodiment, wherein the system 100 is built for impact soundwaves detection, the system 100 performs data acquisition of soundwaves i.e., the sound signal s(t) from the industrial machinery using the microphone array, and data analysis using a filtering component 202, an eigen value decomposer 204 obtains the filtered audio signal and finds a signal covariance matrix R from the filtered audio signal and evaluates the noise subspace $Q_n$ by extracting eigenvectors corresponding to zero eigenvalue from the covariance matrix R, a spatial power matrix evaluator 206 evaluates the power over a range of azimuth and elevation angles specific to the target surface $(\theta_\sigma, \phi_\sigma)$ using the target specific steering vector $A(\theta_\sigma, \phi_\sigma)$ and the noise subspace $Q_n$ as $P\_SPATIAL(\theta_\sigma, \varphi_\sigma)_{T,f} = (|A(\theta_\sigma, \phi_\sigma)^H Q_n Q_n^H A(\theta_\sigma, \phi_\sigma)|)^{-1}$. A geometrical structure parameters extractor 208 extracts structure of industrial machinery. A target specific steering vector 208 obtains the transformed target surface for its initialization, and subsequently addresses points in space over a range of azimuth and elevation angles specific to the target surface for determining the spatial power matrix, a spatial power matrix 208 obtains input from the eigen value decomposer 204, a target specific steering vector 210, and a spatial map 212 is constructed to detect map of spatiotemporal impact hotspots on the target machine, explained in conjunction with FIG.2.

In an illustrative example scenario, the industrial environment includes one or more machineries which can cause one or more sound events. The one or more sound events includes sounds of each machinery occurring due to sound crushing, grinding but are not limited to sound of hammer, pounding stones, sound of rotating balls and the like. The industrial environment corresponds to an enclosed environment with a microphone array. The microphone array includes a series of microphones configured to a sound event localization and detection through a network.

FIG.3A and FIG.3B (collectively referred as FIG.3) is a flow diagram illustrating a method to detect impact induced soundwaves using the system of FIG.1, in accordance with some embodiments of the present disclosure.

In an embodiment, the system 100 comprises one or more data storage devices or the memory 102 operatively coupled to the processor(s) 104 and is configured to store instructions for execution of steps of a method 300 by the processor(s) or one or more hardware processors 104. The steps of the method 300 of the present disclosure will now be explained with reference to the components or blocks of the system 100 as depicted in FIG.1 through FIG.2, and the steps of flow diagram as depicted in FIGS.3 through 11. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 300, at step 302 a one or more hardware processor is configured to preconfigure an industrial machinery by placing a microphone array at different locations within the machinery to record a sound signal s(t), and simultaneously obtaining geometrical structure parameters of the machinery.

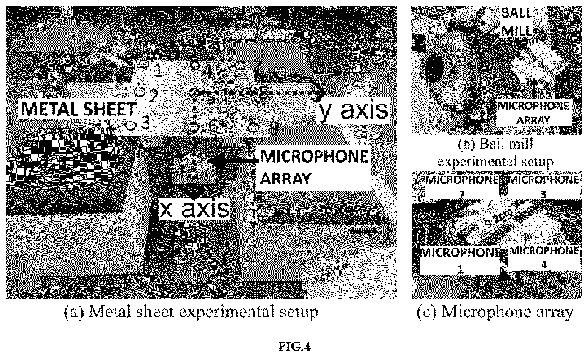

The above illustrative example (referring to FIG.4) may be a metal sheet experiment, or a ball mill experiment and the like placed in the industrial environment. Here, the microphone array is placed at different locations outside the ball mill where there may be an occurrence of impact soundwaves.

The occurrence of industrial impact sound may be from grinding, crushing and the like. The microphone array continuously records the sound signal *s(t)* occurred in the machinery. Unlike many audio signals in nature, industrial machinery noises are instantaneous in time domain which has extreme high decibel dB (levels for very short duration) and wideband in frequency domain. Spatially locating or tracking of such impact sound occurrences is illustrated in further embodiments of the present disclosure.

At step 304 of the method 300, the one or more hardware processors is configured to obtain (i) the sound signal *s(t)* from the microphone array occurred on surface of target of interest of the machinery, (ii) an impact duration which is an occurrence duration of the sound signal *s(t),* and (iii) a target FPS.

The sound signal s(t), or soundwaves is obtained from the microphone array occurred on surface of target of interest of the machinery. The occurred impact sound signal *s(t)* may be due to grinding, crushing, impact, or various reasons such as jaw crushers, cone crushers, ball mills, rod mills, or SAG mills, hoppers.

At step 306 of the method 300, the one or more hardware processors is configured to slice the sound signal *s(t)* by adjusting a sliding time window *T* and a step size $\Delta T$ to obtain a time windowed sound signal $s(t)_{win}$.

Once the sound signal *s(t)* isobtained from the microphone array, the sound signal *s(t)* is continuously sliced by adjusting the sliding time window *T* with a step size $\Delta T$. It is noted that the sliding time window is of fixed window size of T.

Referring now to the step 308 of the method 300 the one or more hardware processors is configured to apply filtering to filter the time windowed sound signal $s(t)_{win}$ to obtain a filtered sound signal $s(t)_{filt}$ based on (i) a sliding narrow band pass filter of central frequency *f,* (ii) a frequency range between $[F_L, F_H]$ a spectral response of impact type, and (iii) a band distance $\Delta F$.

Here, the filtering component 202 processes the time windowed sound signal $s(t)_{win}$ is filtered to obtain the filtered sound signal $s(t)_{filt}$.

At step 310 of the method 300 the one or more hardware processors is configured to perform an eigenvalue decomposition over a covariance matrix R of the filtered sound signal $s(t)_{filt}$ to determine a noise subspace $Q_n$.

The eigen value decomposer 204 obtains the filtered sound signal to perform eigenvalue decomposition over the noise subspace $Q_n$ which is spanned by the eigenvectors corresponding to zero eigenvalues, in the covariance matrix R. Since the steering vector A($\theta, \varphi$) ideally lies in the signal subspace, the product of an eigenvector and a steering vector is ideally "zero".

In practical scenario, the sound signal *s(t)* is combined with the noise. Therefore, the objective is to minimize the product of the steering vector and noise eigenvector by traversing the steering vector over a range of angles $\theta$ *and* $\varphi$. This minimizes when the steering vector points towards the direction of the sound source, where the signal power is maximum and the noise power is comparatively much lesser than the signal power. Further, the filtered sound signal $s(t)_{filt}$ is utilized to perform the eigenvalue decomposition over a covariance matrix *R*.

Referring now to the step 312 of the method 300 the one or more hardware processors is configured to obtain a steering vector $A(\theta_\sigma, \varphi_\sigma)$ from the geometrical structure parameters of the machinery and the noise subspace $Q_n$ to evaluate a spatial power matrix $P\_SPATIAL(\theta_\sigma, \varphi_\sigma)T, f$ for each time window of the sound signal $s(t)_{filt}$.

Further, the geometrical structure parameters of the machinery is extracted by the geometrical structure parameters extractor 206.

The spatial power matrix evaluator 210 obtains the steering vector by initially acquiring the geometrical structure parameters of the machinery comprising a height (h), diameter (D), and length to determine a target surface which is visible to the microphone array which provides a cartesian coordinates for the target surface.

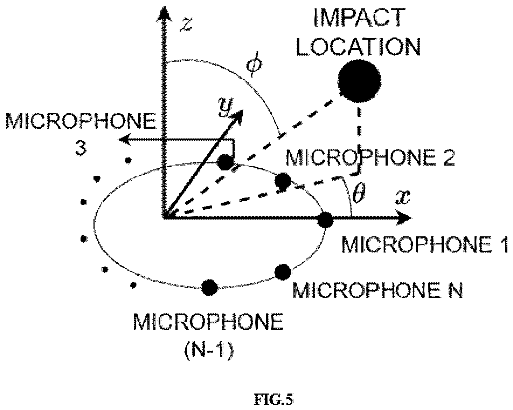

Referring now to FIG.5, cartesian coordinates of the ball mill experiment $\sigma'(x, y, z)$ is transformed on the target surface into a spherical coordinates $\sigma(r, \theta, \varphi)$. Finally, the steering vector is focused into the target surface $A(\theta_\sigma, \varphi_\sigma)$ by

initializing a steering vector matrix considering only the directions having occurrence of sound signal significant to the spherical coordinates ($r$, $\theta$, $\varphi$) of the target surface.

In one embodiment, existing 2D beamforming approaches provide the spatial map projected on the microphone array plane by steering along all possible directions. Initially, in industrial setting the exact location of anomalous impacts must be pointed out within the machine structure only, and not the entire space in the field of view of mic array. The steering vector matrix is defined in Equation 1,

$$A(\theta, \varphi) \; = \; [a(\theta_1, \varphi_1) \; a(\theta_2, \varphi_2) \ldots a(\theta_M, \varphi_M)] \; --- \; Equation \; 1$$

where $a(\theta_M, \varphi_M)$ is the steering vector which has as many elements as the number of microphones in the microphone array. The ith element of $a(\theta_M, \varphi_M)$ (for N-mirophone array). The method further considers only the directions significant to the target surface and accordingly redefines the steering vectors. This is done by defining the target surface of the machine using the input geometrical structure parameters and the points are transformed on the target surface from cartesian coordinates to spherical coordinates. Then, these azimuth ($\theta_\sigma$), and elevation ($\varphi_\sigma$) angles are then used to initialize the machine specific steering vector $A(\theta_\sigma, \varphi_\sigma)$ parameterizing the cartesian coordinate points based on the geometrical structure parameters, resampling of spherical coordinate points on the target surface. This results in search space reduction.

Referring now to the step 314 of the method 300 the one or more hardware processors is configured to obtain a spatial localization map on a microphone array plane for each time window ($P\_TOTAL(\theta_\sigma, \varphi_\sigma)_T$) using the spatial power matrix $P\_SPATIAL(\theta_\sigma, \varphi_\sigma)_{T,F}$.

Once the spatial power matrix is determined from the above step, the spatial localization map can be obtained for each time window on the microphone array plane by isolating a true location of impact source occurred in the surface of target of interest and performing noise suppression localization. To isolate the true location of the impact source and suppress the errors in localization, the following steps are executed: Firstly, the windowed signal is passed through a range of narrow band filter banks over a frequency range [*FL, FH*] (band distance $\Delta$F). The choice of the filter banks or frequency range are determined by the spectral response of the impact type. Then, the spatial power matrix $P\_SPATIAL(\theta_\sigma, \varphi_\sigma)T, F$ is evaluated for each filtered version of the windowed signal, using the noise subspace $Q_n$ (evaluated by the eigenvalue decomposition of the covariance matrix R of the windowed signal) and steering vector A. Finally, $P\_SPATIAL(\theta_a, \varphi_\sigma)T, F$ is normalized and added up over the entire frequency range [*FL, FH*]. Mathematically, the resulting spatial localization map is given in Equation 2,

$$\sum_{j=0}^{\frac{Fh-FL}{\Delta F}} \frac{P\_SPATIAL(\theta_\sigma, \varphi_\sigma)_{T, F_l+j\Delta F}}{\max \left( P\_SPATIAL(\theta_\sigma, \varphi_\sigma)_{T, F_l+j\Delta F} \right)} \; --- \; Equation \; 2$$

The choice of normalization followed by addition is empirical in nature. It has been empirically observed that two sources of different intensities could not be localized when the multiplication operator was used instead of addition. This is because, the quieter source mostly gives a normalized power which is less than one, while the normalized power of the louder source remains at one. Therefore, upon repeated multiplication, the quieter source gets suppressed, leaving only the louder source visible. If the spatial power matrices were added without normalization, the erroneous localization peaks with extremely high value of power got added up to the final spatial localization map, thereby propagating the error to the final map. Normalization before addition ensures that all the individual $P\_SPATIAL(\theta_\sigma, \varphi_\sigma)_{T,F}$ have equal contributions to the final localization map.

At step 316 of the method 300, the one or more hardware processors is configured to project the spatial localization map on target surface of the microphone array plane with a cartesian coordinates $\sigma'(x, y, z)$.

Further, the spatial localization map is projected on target surface of the microphone array plane to identify a one or more impact hotspots as described in below step.

At step 318 of the method 300, the one or more hardware processors is configured to identify a one or more impact hotspots on the target surface of the machinery by searching one or more peaks in the spatial localization map projected into the target surface and accumulating the one or more impact hotspots over a long temporal range.

It is to be noted that huge industrial machines may have denser impacts in one location as compared to other, when operated over a long temporal range (impact hotspots). The spatiotemporal distribution of the impact positions are obtained over long temporal range will thus help identify impact hotspots. Firstly, the instantaneous impact positions are identified by the peak spatial power in the spatial localization map which is projected onto the target surface as in Equation 3,

$$(x_{max}, y_{max}, z_{max}) = argmax\ P\_TOTAL(x, y, z)_T$$

$$---Equation\ 3$$

Further, these locations of peak spatial power are accumulated over a long temporal range for example months or days and is projected on the target surface of the machine structure. This will help industrial machinery operator to identify the regions of the machine structure which is undergoing more impacts than the others. This will help predictive maintenance where high impact frequency at a given area of the machine structure may correlate to higher damage within that area as compared to other areas.

At step 318 of the method 300, the one or more hardware processors is configured to localize exact location of occurred impact sound from the one or more impact hotspots and is projected on the machinery.

FIG.4 illustrates various lab scale experiments having metal sheet and ball mill for detecting soundwaves using the system of FIG.1, in accordance with some embodiments of the present disclosure. A 4-microphone array of radius rMIC=4.6cm was built using off-the shelf (OTS) microphones. The sound signal was amplified with adjustable gain preamplifier, subsequently sampled at 48kHz using the filtering component 202. The gain of amplifier were adjusted to avoid clipping of the microphone sound signal. Here, for the ball mill experiment, $\tau, \Delta\tau, f_L, f_H, \Delta f$ have been set to 0.1s, 0.01s, 100Hz, 4000Hz, 100Hz respectively.

**Experiment with a planar surface:** A 64cm x 64cm metal sheet was kept at hSHEET = 54.5cm above the floor. The microphone array was placed below the center of the metal sheet with mic 1 oriented at -45 degrees relative to the x axis (FIG.4). A 2cm steel ball was hit at the annotated points on the metal sheet, while the data was captured. This experiment was repeated for two distances of the microphone array from the metal sheet viz. DMIC = 44cm, DMIC = 26.1cm.

**Experiment with a curved surface:** A lab-scale ball mill of 14cm diameter, 19cm length, and 15cm clearance from the base was employed for the experiment. The center of the mic array was kept at 21cm from the center of the ball mill, along x axis. Mic 1 oriented at -45 degrees relative to the x axis. The mic array was at a distance of DMIC = 10cm from the mill shell. A 2cm diameter steel ball was dropped towards left, right, and center from the rim of the mill shell opening.

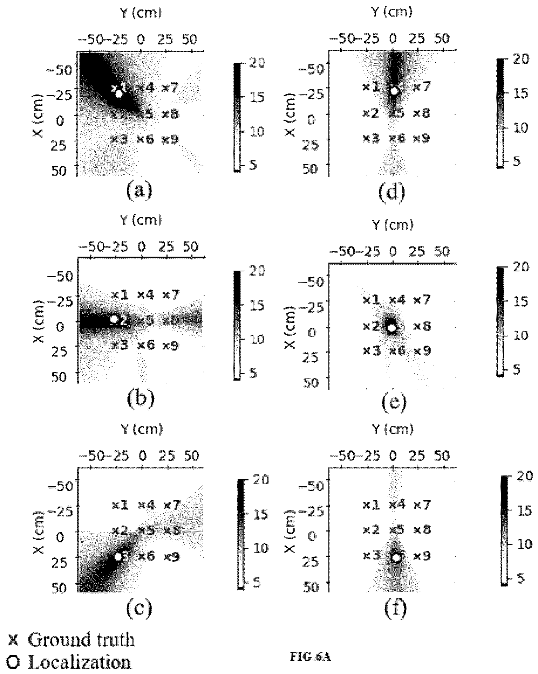

FIGS.6A through 9 illustrates an metal sheet experimental results for detecting detect impact induced soundwaves.

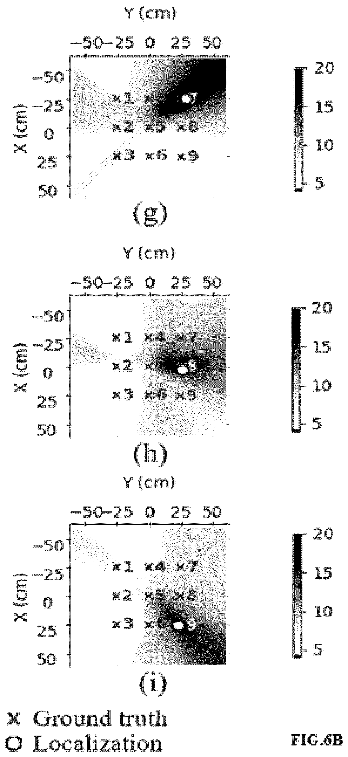

**Metal Sheet Experiment** : The results have been summarized in FIGS.6A through 9. FIG.6A and FIG.6B illustrates experimental results for metal sheet having impact soundwaves with one ball at ground truth and elevation of metal plate from microphone array at 26.1cm.

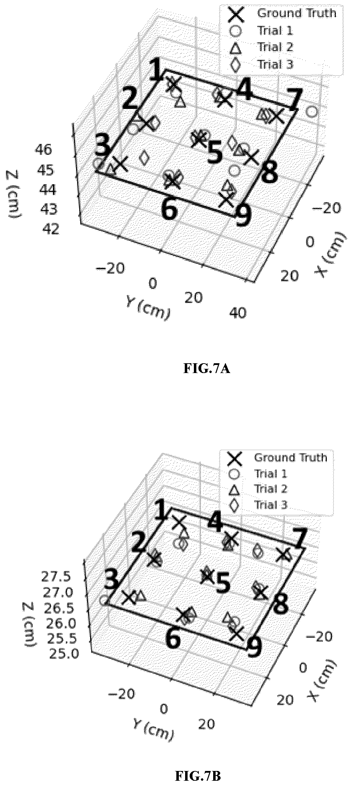

It is visually exemplified in FIG.7A and FIG.7B where the predictions are closer to ground truth in the latter case. This is due to the increase in the viewing angle of the microphone array, which in turn increases the spatial resolution. However, it should also be noted that the sound signal acquired from the microphone has been experimentally observed to clip upon further decrease in DMIC. This places a constraint on the minimum value of DMIC.

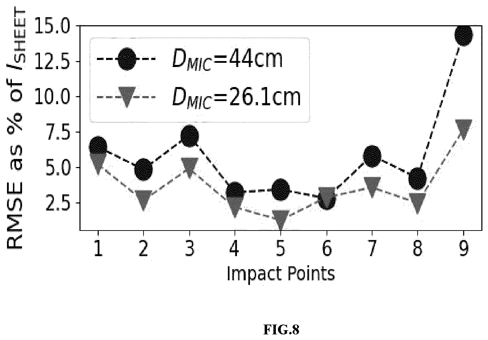

FIG.8 illustrates the Root Mean Squared Error (RMSE) of the sound localization in FIG.6A and FIG.6B as a percentage of the length of the metal sheet. It is observed in FIG.8 that Root Mean Square Error (RMSE) values are typically lower when the mic array is placed closer to the metal sheet.

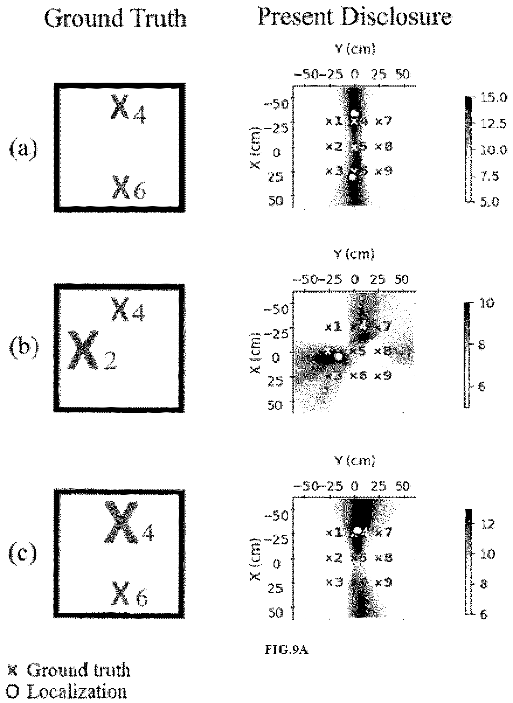

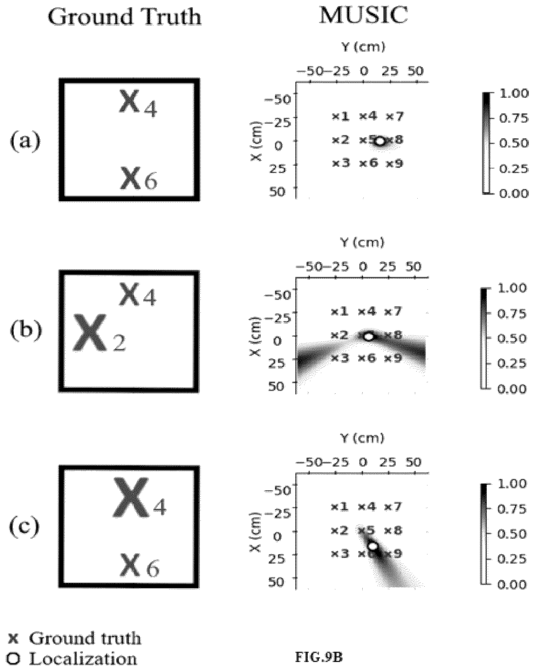

FIG.9A and FIG.9B illustrate experimental results of metal sheet with two simultaneous impacts having (i) balls of same mass and diameter and (ii) balls of different mass and diameter. While FIG.9A compares the ground truth with the localization results of the present disclosure, FIG.9B compares the ground truth with the localization results from MUSIC.

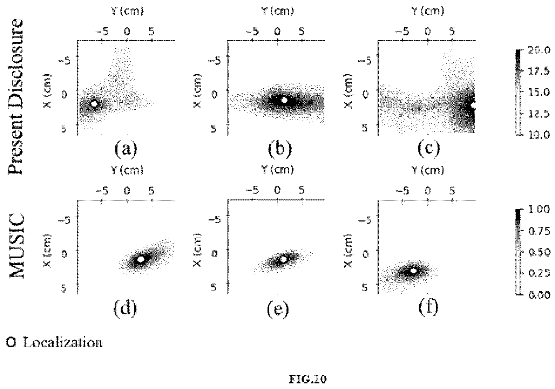

FIGS.10 through 11 illustrates an experimental result for cylindrical ball mill and combined view of three impacts inside the ball mill using the system of FIG.1, in accordance with some embodiments of the present disclosure.

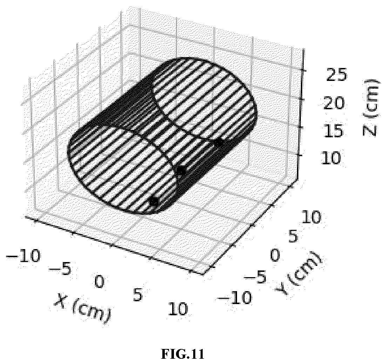

**Ball Mill Experiment:** The results have been summarized in FIGS.10 through 11. The spatial map obtained from coordinate transformations (Equation 3) is projected to a cylindrical surface. The spatial maps agree with the actual position of ball drop i.e., left, right, and center. Upon comparing the result with conventional MUSIC existing technique, the experimental results of FIG.10 provides effectiveness of the averaging principle of the proposed method which becomes more evident whereas MUSIC fails to localize the impact source. FIG.11 combines the results from the FIG.10 showing a temporal range (say months), where the longitudinal data can be collectively analyzed for the rate of impact at any particular region of the ball mill, which is vital for predictive maintenance.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of spatial localization. The embodiment, thus provides method and system for unobtrusive spatial localization and detection of impact induced soundwaves. Moreover, the embodiments herein further provides method to determine target specific steering vectors for 2D beamforming techniques so that the location of impact soundwaves is only searched over the target surface visible to the microphone array as an alternative of traversing through all azimuth and elevation angles. Furthermore, the method determines spatiotemporal distribution of impact induced sound waves, where the spatial localization map is projected in the target surface visible to the microphone array. The method of the present disclosure satisfactorily localizes wideband, non-coherent sources of impacts for both planar and curved target surfaces. Unlike conventional beamforming, it averages out the phase errors. The RMSE stays well below 10% for most cases. The method is capable of providing promising results for various impact conditions, noise should be factored into consideration. In practical scenario, industrial machines are surrounded by numerous sources of background noise. In the future, the localization performance of the proposed approach needs to be observed in presence of such noise-prevalent conditions.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for spatial localization of impact induced sound waves, the method further comprising:

   preconfiguring (302) an industrial machinery via one or more hardware processor by placing a microphone array at different locations within the machinery to record a sound signal $s(t)$, and simultaneously obtaining geometrical structure parameters of the machinery;

obtaining (304) via the one or more hardware processors (i) the sound signal s(t)from the microphone array occurred surface of target of interest of the machinery, (ii) an impact duration which is an occurrence duration of the sound signal s(t), and (iii) a target FPS;

slicing (306) the sound signal $s(t)$ via the one or more hardware processors by adjusting a sliding time window $T$ and a step size $\Delta T$ to obtain a time windowed sound signal $s(t)_{win}$;

applying filtering (308) to filter the time windowed sound signal $s(t)_{win}$ via the one or more hardware processors to obtain a filtered sound signal $s(t)_{filt}$ based on (i) a sliding narrow band pass filter of central frequency f, (ii) a frequency range between [*FL, FH*] a spectral response of impact type, and (iii) a band distance $\Delta F$;

performing an eigen value decomposition (310) via the one or more hardware processors over a covariance matrix $R$ of the filtered sound signal s(t)$_{FILT}$ to determine a noise subspace $Q_n$;

obtaining (312) a steering vector $A(\theta_\sigma, \varphi_\sigma)$ from the geometrical structure parameters of the machinery and the noise subspace $Q_n$ via the one or more hardware processors to evaluate a spatial power matrix $P\_SPATIAL(\theta_\sigma, \varphi_\sigma)T, f$ for each time window of the sound signal $s(t)_{filt}$;

obtaining (314) via the one or more hardware processors a spatial localization map on a microphone array plane for each time window ($P\_TOTAL(\theta_\sigma, \varphi_\sigma)T$) using the evaluated spatial power matrix $P\_SPATIAL(\theta_\sigma, \varphi_\sigma)T, F$;

projecting (316) via the one or more hardware processors the spatial localization map on target surface of the microphone array plane with a cartesian coordinates $\sigma'(x, y, z)$;

identifying (318) a one or more impact hotspots on the target surface of the machinery via the one or more hardware processors by searching one or more peaks in the spatial localization map projected into the target surface and accumulating the one or more impact hotspots over a long temporal range; and

localizing (320) via the one or more hardware processors exact location of occurred impact sound from the one or more impact hotspots and is projected on the machinery.

2. The processor implemented method of claim 1, wherein the steering vector is obtained by performing the steps of:

acquiring the geometrical structure parameters of the machinery further comprising a height (h), diameter (D), and length to determine a target surface which is visible to the microphone array which provides a cartesian coordinates for the target surface;

transforming the cartesian coordinates $\sigma'(x, y, z)$ on the target surface into a spherical coordinates $\sigma(r, \theta, \varphi)$; and obtaining the steering vector focused into the target surface $A(\theta_\sigma, \varphi_\sigma)$ by initializing a steering vector matrix considering only the directions having occurrence of sound signal significant to the spherical coordinates $(r, \theta, \varphi)$ of the target surface.

3. The processor implemented method of claim 1, wherein the spatial localization map is obtained by isolating a true location of impact source occurred in the surface of target of interest, and performing noise suppression localization,

4. The processor implemented method of claim 3, wherein the impact source occurrence of the true location is isolated by normalizing and adding a spatial power matrices from a $P\_SPATIAL(\theta_\sigma, \varphi_\sigma)T, F$ over the entire frequency range.

5. A system (100) for spatial localization of impact induced sound waves, further comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

preconfigure an industrial machinery by placing a microphone array at different locations within the machinery to record a sound signal $s(t)$, and simultaneously obtaining geometrical structure parameters of the machinery;

obtain (i) the sound signal s(t)from the microphone array occurred surface of target of interest of the machinery, (ii) an impact duration which is an occurrence duration of the sound signal s(t), and (iii) a target FPS;

slice the sound signal $s(t)$ by adjusting a sliding time window $T$ and a step size $\Delta T$ to obtain a time windowed sound signal $s(t)_{win}$;

applying filter to filter the time windowed sound signal $s(t)_{win}$ to obtain a filtered sound signal $s(t)_{filt}$ based on (i) a sliding narrow band pass filter of central frequency f, (ii) a frequency range between [*FL, FH*] a spectral response of impact type, and (iii) a band distance $\Delta F$;

perform an eigenvalue decomposition over a covariance matrix R of the filtered sound signal s(t)$_{FILT}$ to determine a noise subspace $Q_n$;

obtain a steering vector $A(\theta_\sigma, \varphi_\sigma)$ from the geometrical structure parameters of the machinery and the noise subspace $Q_n$ to evaluate a spatial power matrix $P\_SPATIAL(\theta_\sigma, \varphi_\sigma)T, f$ for each time window of the sound signal $s(t)_{filt}$;

obtain a spatial localization map on a microphone array plane for each time window $(P\_TOTAL(\theta_\sigma, \varphi_\sigma)T)$ using the spatial power matrix $P\_SPATIAL(\theta_\sigma, \varphi_\sigma)T, F$;

project the spatial localization map on target surface of the microphone array plane with a cartesian coordinates $\sigma'(x, y, z)$;

identify one or more impact hotspots on the target surface of the machinery by searching one or more peaks in the spatial localization map projected into the target surface and accumulating the one or more impact hotspots over a long temporal range; and

localize exact location of occurred impact sound from the one or more impact hotspots and is projected on the machinery.

6. The system of claim 5, wherein the steering vector is obtained by performing the steps of:

acquiring the geometrical structure parameters of the machinery further comprising a height (h), diameter (D), and length to determine a target surface which is visible to the microphone array which provides a cartesian coordinates for the target surface;

transforming the cartesian coordinates $\sigma'(x, y, z)$ on the target surface into a spherical coordinates $\sigma(r, \theta, \varphi)$; and

obtaining the steering vector focused into the target surface $A(\theta_\sigma, \varphi_\sigma)$ by initializing a steering vector matrix considering only the directions having occurrence of sound signal significant to the spherical coordinates $(r, \theta, \varphi)$ of the target surface.

7. The system of claim 5, wherein the spatial localization map is obtained by isolating a true location of impact source occurred in the surface of target of interest, and performing noise suppression localization,

8. The system of claim 5, wherein the impact source occurrence of the true location is isolated by normalizing and adding a spatial power matrices from a $P\_SPATIAL(\theta_\sigma, \varphi_\sigma)T, F$ over the entire frequency range.

9. One or more non-transitory machine-readable information storage mediums comprising one or more instructions which when executed by one or more hardware processors cause:

preconfiguring an industrial machinery by placing a microphone array at different locations within the machinery to record a sound signal $s(t)$, and simultaneously obtaining geometrical structure parameters of the machinery;

obtaining (i) the sound signal s(t)from the microphone array occurred surface of target of interest of the machinery, (ii) an impact duration which is an occurrence duration of the sound signal s(t), and (iii) a target FPS;

slicing the sound signal $s(t)$ by adjusting a sliding time window $T$ and a step size $\varDelta T$ to obtain a time windowed sound signal $s(t)_{win}$;

applying filtering to filter the time windowed sound signal $s(t)_{win}$ to obtain a filtered sound signal $s(t)_{filt}$ based on (i) a sliding narrow band pass filter of central frequency f, (ii) a frequency range between [$FL, FH$] a spectral response of impact type, and (iii) a band distance $\varDelta F$;

performing an eigen value decomposition over a covariance matrix R of the filtered sound signal $s(t)_{FILT}$ to determine a noise subspace $Q_n$;

obtaining a steering vector $A(\theta_\sigma, \varphi_\sigma)$ from the geometrical structure parameters of the machinery and the noise subspace $Q_n$ to evaluate a spatial power matrix $P\_SPATIAL(\theta_\sigma, \varphi_\sigma)T, f$ for each time window of the sound signal $s(t)_{filt}$;

obtaining a spatial localization map on a microphone array plane for each time window $(P\_TOTAL(\theta_\sigma, \varphi_\sigma)T)$ using the evaluated spatial power matrix $P\_SPATIAL(\theta_\sigma, \varphi_\sigma)T, F$;

projecting the spatial localization map on target surface of the microphone array plane with a cartesian coordinates $\sigma'(x, y, z)$;

identifying a one or more impact hotspots on the target surface of the machinery by searching one or more peaks in the spatial localization map projected into the target surface and accumulating the one or more impact hotspots over a long temporal range; and

localizing exact location of occurred impact sound from the one or more impact hotspots and is projected on the machinery.

**10.** The one or more non-transitory machine-readable information storage mediums of claim 9, wherein the steering vector is obtained by performing the steps of:

acquiring the geometrical structure parameters of the machinery further comprising a height (h), diameter (D), and length to determine a target surface which is visible to the microphone array which provides a cartesian coordinates for the target surface;
transforming the cartesian coordinates $\sigma'(x, y, z)$ on the target surface into a spherical coordinates $\sigma(r, \theta, \varphi)$, and obtaining the steering vector focused into the target surface $A(\theta_\sigma, \varphi_\sigma)$ by initializing a steering vector matrix considering only the directions having occurrence of sound signal significant to the spherical coordinates $(r, \theta, \varphi)$ of the target surface.

**11.** The one or more non-transitory machine-readable information storage mediums of claim 9, wherein the spatial localization map is obtained by isolating a true location of impact source occurred in the surface of target of interest, and performing noise suppression localization,

**12.** The one or more non-transitory machine-readable information storage mediums of claim 11, wherein the impact source occurrence of the true location is isolated by normalizing and adding a spatial power matrices from a $P\_SPATIAL(\theta_\sigma, \varphi_\sigma)T, F$ over the entire frequency range.

EP 4 686 922 A1

System 100

Hardware Processor(s) 104     I/O Interface(s) 106

Memory 102

Modules 108

**FIG.1**

**200**

Industrial Environment
machinery

Input : soundwaves

Filtering component 202

Geometrical structure
parameters extractor 206

Eigen value decomposer
204

Target specific
Steering vector 208

Spatial power matrix
evaluator 210

Spatial map 212

Output : Map of spatiotemporal impact
hotspots on the target machine

**FIG.2**

**300**

preconfigure an industrial machinery by placing a microphone array at different locations within the machinery to record a sound signal $s(t)$, and simultaneously obtaining geometrical structure parameters of the machinery

**302**

obtain (i) the sound signal $s(t)$ from the microphone array occurred surface of target of interest of the machinery, (ii) an impact duration which is an occurrence duration of the sound signal s(t), and (iii) a target FPS

**304**

slice the sound signal $s(t)$ by adjusting a sliding time window $T$ and a step size $\Delta T$ to obtain a time windowed sound signal $s(t)_{win}$

**306**

applying filter to filter the time windowed sound signal $s(t)_{win}$ to obtain a filtered sound signal $s(t)_{filt}$ based on (i) a sliding narrow band pass filter of central frequency f, (ii) a frequency range between $[F_L, F_H]$ a spectral response of impact type, and (iii) a band distance $\Delta F$

**308**

perform an eigenvalue decomposition over a covariance matrix $R$ of the filtered sound signal $s(t)_{FILT}$ to determine a noise subspace $Q_n$

**310**

A

**FIG. 3A**

A

obtain a steering vector $A(\theta_\sigma, \varphi_\sigma)$ from the geometrical structure parameters of the machinery and the noise subspace $Q_n$ to evaluate a spatial power matrix $P\_SPATIAL(\theta_\sigma, \varphi_\sigma)T, f$ for each time window of the sound signal $s(t)_{filt}$

**312**

obtain a spatial localization map on a microphone array plane for each time window $(P\_TOTAL(\theta_\sigma, \varphi_\sigma) T)$ using the spatial power matrix $P\_SPATIAL(\theta_\sigma, \varphi_\sigma)T, F$

**314**

project the spatial localization map on target surface of the microphone array plane with a cartesian coordinates $\sigma'(x, y, z)$

**316**

identify a one or more impact hotspots on the target surface of the machinery by searching one or more peaks in the spatial localization map projected into the target surface and accumulating the one or more impact hotspots over a long temporal range

**318**

localize exact location of occurred impact sound from the one or more impact hotspots and is projected on the machinery

**320**

**FIG. 3B**

(a) Metal sheet experimental setup

(b) Ball mill experimental setup

(c) Microphone array

FIG.4

**FIG.5**

FIG.6A

(g)

(h)

(i)

✘ Ground truth
O Localization

FIG.6B

FIG.7A

FIG.7B

**FIG.8**

FIG.9A

x Ground truth
O Localization

Ground Truth          MUSIC

x Ground truth
O Localization          FIG.9B

FIG.10

**FIG.11**

Europäisches
Patentamt

European
Patent Office

Office européen
des brevets

# EUROPEAN SEARCH REPORT

**Application Number**

EP 25 18 4522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TALAGALA D S ET AL: "Broadband DOA Estimation Using Sensor Arrays on Complex-Shaped Rigid Bodies", IEEE TRANSACTIONS ON AUDIO, SPEECH AND LANGUAGE PROCESSING, IEEE, US, vol. 21, no. 8, 1 August 2013 (2013-08-01), pages 1573-1585, XP011519765, ISSN: 1558-7916, DOI: 10.1109/TASL.2013.2255282 * abstract; figures 1, 3 * * page 1, column 1, paragraph 2 - page 1, column 2, paragraph 1 * * page 4, column 1, paragraph 4 - page 4, column 2, paragraph 3 * * page 6, column 1, paragraph 1 * * page 6, column 2, paragraph 2-4 * ----- | 1-12 | INV.<br>G01H3/12<br><br>ADD.<br>G01H3/04<br>G01H3/08 |
| A | ASAEI A ET AL: "Verified speaker localization utilizing voicing level in split-bands", SIGNAL PROCESSING, ELSEVIER, AMSTERDAM, NL, vol. 89, no. 6, 1 June 2009 (2009-06-01), pages 1038-1049, XP025991790, ISSN: 0165-1684, DOI: 10.1016/J.SIGPRO.2008.12.003 [retrieved on 2009-02-26] * abstract; figure 8 * ----- | 1-12 | |
| A | JP 2018 523011 A (RENISHAW PUBLIC LIMITED COMPANY) 16 August 2018 (2018-08-16) * paragraphs [0026] - [0029], [0072] - [0076]; figure 1 * ----- -/-- | 1-12 | **TECHNICAL FIELDS SEARCHED (IPC)**<br><br>G01H |

The present search report has been drawn up for all claims

| Place of search | Date of completion of the search | Examiner |
|---|---|---|
| The Hague | 1 December 2025 | Naujoks, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| Europäisches<br>Patentamt<br>European<br>Patent Office<br>Office européen<br>des brevets | **EUROPEAN SEARCH REPORT** | **Application Number**<br><br>**EP 25 18 4522** |
|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | KNIGHT WILLIAM C. ET AL: "Digital Signal Processing for Sonar",<br>PROCEEDINGS OF THE IEEE,<br>vol. 69, no. 1,<br>1 November 1981 (1981-11-01), pages 1451-1506, XP093005561,<br>US<br>ISSN: 0018-9219, DOI:<br>10.1109/PROC.1981.12186<br>Retrieved from the Internet:<br>URL:https://ieeexplore.ieee.org/stampPDF/g etPDF.jsp?tp=&arnumber=1456454&ref=aHR0cHM 6Ly9pZWVleHBsb3JlLmllZWUub3JnL2Fic3RyYWN0 2RvY3VtZW50LzE0NTY0NTQ=><br>* abstract; figures 1, 3, 4 *<br>----- | 1-12 | |
| | | | **TECHNICAL FIELDS<br>SEARCHED (IPC)** |

The present search report has been drawn up for all claims

| Place of search | Date of completion of the search | Examiner |
|---|---|---|
| The Hague | 1 December 2025 | Naujoks, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 4522

01-12-2025

| Patent document cited in search report | Publication date | Patent family member(s) | | Publication date |
|---|---|---|---|---|
| JP 2018523011 A | 16-08-2018 | CA | 2991681 A1 | 15-12-2016 |
| | | CN | 107708895 A | 16-02-2018 |
| | | CN | 113231651 A | 10-08-2021 |
| | | EP | 3307522 A1 | 18-04-2018 |
| | | EP | 3705273 A1 | 09-09-2020 |
| | | JP | 2018523011 A | 16-08-2018 |
| | | US | 2018154484 A1 | 07-06-2018 |
| | | US | 2020368850 A1 | 26-11-2020 |
| | | WO | 2016198885 A1 | 15-12-2016 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• IN 202421058443